# EUROPÄISCHE PATENTSCHRIFT

(11) **EP 1 722 197 B1**
(45) Veröffentlichungstag und Bekanntmachung des Hinweises auf die Patenterteilung: **16.02.2011**
(21) Anmeldenummer: 06009946.2
(22) Anmeldetag: 15.05.2006
(51) Int. Cl.: G01C 23/00, B64D 1/22

(54) **Verfahren und Vorrichtung zur Darstellung der Lage und des Bewegungszustands einer pendelfähigen Last**
Method and device for representing the location and the movement state of a load capable of oscillating
Procédé et dispositif destinés à la représentation de l'emplacement et de l'état de déplacement d'une charge oscillante

(30) Priorität: 13.05.2005 DE 102005022231
(43) Veröffentlichungstag der Anmeldung: 15.11.2006
(73) Patentinhaber: Deutsches Zentrum für Luft- und Raumfahrt e.V., 51147 Köln (DE)
(72) Erfinder: Hamers, Mario, 38159 Vechelde (DE); Bouwer, Gerhard, Dr., 38154 Königslutter (DE)
(74) Vertreter: Rehberg Hüppe + Partner

(56) Entgegenhaltungen:
- EP-A- 1 146 317
- FR-A- 2 661 887
- US-A- 3 727 055

## Beschreibung

Die Erfindung betrifft ein Verfahren zur Darstellung der Lage und des Bewegungszustands einer pendelfähigen Last sowie eine entsprechende Vorrichtung.

Bei der pendelfähigen Last kann es sich beispielsweise um eine über ein Seil an einen Hubschrauber oder einen Kran angehängte Last handeln.

Der Sinn der Darstellung der Lage und des Bewegungszustands der pendelfähigen Last besteht darin, zum Beispiel einen Hubschrauberpiloten oder einen Kranführer beim Positionieren, insbesondere beim positionsgenauen Absetzen einer für ihn nicht sichtbaren Last zu unterstützen.

### STAND DER TECHNIK

Ein Verfahren zur Darstellung des Bewegungszustands einer an einen Hubschrauber angehängten Last während des Flugs sowie eine entsprechende Vorrichtung sind aus der EP 1 146 317 A1 bekannt. Dort geht es darum, dem Piloten eines Hubschraubers zu ermöglichen, ein von außen angeregtes Längs- und/oder Querpendeln einer an den Hubschrauber angehängten Last schnell abzubauen und Manöver so zu fliegen, dass ein Pendeln der angehängten Last erst gar nicht angeregt wird. Zu diesem Zweck wird eine zeitliche Ableitung eines Winkels zwischen der Erdsenkrechten und der Richtung, unter der die jeweilige Last auf den Hubschrauber einwirkt bestimmt und der Darstellung der Orientierung des Hubschraubers auf einem künstlichen Horizont additiv überlagert. Wenn der Hubschrauberpilot auf Änderungen des angezeigten Werts bei dieser überlagerten Winkeldarstellung in einer Weise reagiert, wie er es bei Änderungen des Nick- bzw. Rollwinkels des Hubschraubers gewohnt ist, wird ein Pendeln der an den Hubschrauber angehängten Last abgebaut bzw. von vornherein vermieden. Beim Absetzten einer an einen Hubschrauber angehängten Last kommt es aber nicht allein darauf an, Pendelbewegungen der Last um horizontal verlaufende Achsen zu vermeiden bzw. zum Vermeiden von Pendelbewegungen der Last gegenüber dem Hubschrauber stehen nur begrenzte Möglichkeiten zur Verfügung, weil der Hubschrauber beispielsweise zum Abfangen einer Pendelbewegung nicht von der gewünschten Absetzposition der Last weg bewegt werden kann, ohne dass das gesamte Absetzmanöver von vorn begonnen werden muss.

Häufig werden angehängte Lasten daher so abgesetzt, dass sie vor der Bodenberührung von einer Bodencrew aufgefangen werden, die die Lasten seitlich über die gewünschte Absetzstelle dirigieren und dabei auch um das Seil herum verdrehen. Das Einfangen pendelnder Lasten ist jedoch ein gefährliches Unterfangen, da die Gefahr besteht, von der pendelnden Last angeschlagen oder mitgeschleppt zu werden.

Eine Bodencrew, die einem Hubschrauberpiloten oder Kranführer nur verbale Anweisungen bzw. Informationen für das Absetzen einer jeweiligen Last gibt, ist zwar weniger gefährdet, aber nur als eingespieltes Team zusammen mit einem erfahrenen Hubschrauberpiloten oder Kranführer können so Lasten präzise positioniert und abgesetzt werden.

In jedem Fall bedeutet sowohl eine Lasten auffangende als auch eine Lasten durch Sprachkommandos dirigierende Bodencrew zusätzliches Personal.

Es sind Hubschrauber bekannt, die einen Autopiloten aufweisen, der ein automatisches Schweben des Hubschraubers über einer bestimmten Bodenposition ermöglicht. Allerdings ist dies bei nur wenigen Hubschraubertypen der Fall. Außerdem hält der Autopilot nur die Lage des Hubschraubers über dem Boden aber nicht diejenige einer an ihn angehängten Last konstant. Dies kann z. B. bei böigem Wetter dazu führen, dass der Hubschrauber auf der Stelle schwebt, die Last jedoch pendelt, d. h. nicht präzise abgesetzt werden kann.

### AUFGABE DER ERFINDUNG

Der Erfindung liegt die Aufgabe zugrunde, ein Verfahren zur Darstellung der Lage und des Bewegungszustands einer pendelfähigen Last sowie eine entsprechende Vorrichtung aufzuzeigen, die ohne großen technischen Aufwand eine leicht erfassbare Informationen über die Lage und den Bewegungszustand der Last vermitteln, auf die zum Beispiel durch einen Hubschrauberpiloten eines Hubschraubers oder einen Kranführer eines Krans, an den die Last angehängt ist, intuitiv richtig reagiert wird, so dass die Last von ihm allein schnell richtig positioniert wird.

### LÖSUNG

Die Aufgabe der Erfindung wird durch ein Verfahren mit den Merkmalen des unabhängigen Patentanspruchs 1 und eine entsprechende Vorrichtung mit den Merkmalen des unabhängigen Patentanspruchs 12 gelöst.

Vorteilhafte Ausführungsformen des neuen Verfahrens und der neuen Vorrichtung sind in den Unteransprüchen 2 bis 11 bzw. 13 bis 22 definiert.

### BESCHREIBUNG DER ERFINDUNG

Bei dem neuen Verfahren und der neuen Vorrichtung werden Abweichungen einer Istposition der Last von einer Sollposition der Last zumindest in zwei unabhängigen horizontalen Richtungen ermittelt. Diese Abweichungen geben beispielsweise den seitlichen Versatz der Lage der Last gegenüber einem Ort, an dem die Last abgesetzt werden soll, in x- und y-Richtung wieder. Die entsprechenden Abweichungen werden erfindungsgemäß jedoch nicht nur als solche, sondern überlagert zumindest mit einer Ableitung und/oder einem Integral der jeweiligen Abweichung dargestellt. Hierdurch werden dynamische Aspekte des Bewegungszustands der pendelfähigen Last betont. So wird es erleichtert, beim Annähern der Last an eine gewünschte Sollposition intuitiv auch deren Pendelbewegungen zu unterdrücken. Die dynamischen Aspekte des Bewegungszustands der pendelfähigen Last spiegeln sich insbesondere in den Ableitungen der Abweichungen der Last zwischen ihrer Istposition und ihrer Sollposition wieder. Die erste Ableitung entspricht dabei einer Relativgeschwindigkeit und die zweite Ableitung einer Relativbeschleunigung der Last gegenüber der Sollposition. Ein Integral einer Abweichung weist hingegen darauf hin, in wieweit die gewünschte Annäherung der Istposition der Lage der Last an ihre Sollposition fortschreitet. Bei der Erfindung werden die Abweichungen zwischen der Istposition und der Sollposition der Last in zwei unabhängigen horizontalen Richtungen ermittelt und damit in der Horizontalen vollständig erfasst. Die Abweichungen in diesen beiden Richtungen werden durch eine gemeinsame Anzeige fortlaufend optisch angezeigt, wobei es sich um eine zweidimensionale Anzeige handelt, die sich mit Änderungen der Werte für jede der beiden unabhängigen horizontalen Richtungen in eine andere Richtung bewegt. Es ist damit durch Betrachten der Anzeige unterscheidbar, in welcher Richtung die Abweichungen zwischen der Ist- und der Sollposition vorliegen. Dabei bewegt sich die Anzeige vorzugsweise gegenüber einer Markierung, die die Sollposition der Last anzeigt, so dass jedwede Abweichungen, einschließlich ihrer berücksichtigten Ableitungen und Integrale sofort sichtbar werden.

Die beiden linear unabhängigen Richtungen, in denen Abweichungen der Istposition der Last von ihrer Sollposition ermittelt werden und die auch die Richtungen bestimmen, in denen sich die Anzeige mit Änderungen der aus den Abweichungen abgeleiteten Werte bewegt, können absolut fest liegen. Beim Absetzen einer an einem Hubschrauber angehängten Last ist es für den Hubschrauberpiloten häufig jedoch günstiger, wenn die linear unabhängigen Richtungen durch die Orientierung des Hubschraubers definiert werden, also beispielsweise durch die Längs- und die Querrichtung des Hubschraubers festgelegt sind. Dabei kann auch eine Koordinatentransformation der zunächst in ortsfesten Richtungen festgestellten Abweichungen in das Koordinatensystem des Hubschraubers erfolgen. Bei einem Kran ist es manchmal günstiger, die Richtungen, in denen die mit der Anzeige angezeigten Abweichungen ermittelt werden, nicht durch die Struktur zu definieren, an die die Last angehängt ist, sondern diese linear unabhängigen Richtungen ortsfest zu lassen. Zumindest gilt dies, wenn der Kranführer sich ab Boden befindet und sich nicht mit dem Kran bewegt.

Bei einem Hubschrauber können die beiden Werte, die aus den Abweichungen zwischen der Istposition und der Sollposition in zwei unabhängigen Richtungen abgeleitet werden, durch einen künstlichen Horizont eines Hubschraubers angezeigt werden. Dabei ist es insbesondere vorteilhaft, wenn sich verändernde Werte, die zu Abweichungen in der Richtung der Längsachse des Hubschraubers gehören, als Änderungen der Nicklage des Hubschraubers und entsprechend Werte, die zu Änderungen in Richtung der Querachse des Hubschraubers gehören, als Änderungen der Rolllage des Hubschraubers auf dem künstlichen Horizont dargestellt werden.

Die tatsächliche Nick- und Rolllagen des Hubschraubers können hiermit überlagert dargestellt werden. Der künstliche Horizont des Hubschraubers kann aber auch zur alternativen Darstellung der Werte zu den Abweichungen der Istposition der Last von ihrer Sollposition und der tatsächlichen Nick- und Rolllagen des Hubschraubers verwendet werden.

Bei einem Kran ist es bevorzugt, wenn die beiden Werte zu den Abweichungen zwischen der Istposition und der Sollposition der Last in den beiden linear voneinander unabhängigen Richtungen durch einen Kreuzzeiger angezeigt werden. Wenn der Kreuzzeiger anhaltend in Überdeckung mit einer Markierung gebracht ist, die die Sollposition der Last anzeigt, befindet sich die Last in Ruhe in der Sollposition.

Um die mit der Anzeige darzustellenden Werte aus den ermittelten Abweichungen zwischen der Istposition und der Sollposition der Last abzuleiten, können die Abweichungen gefiltert, differenziert, integriert und/oder mit einem Wichtungsfaktor multipliziert werden, um einzelne Summanden für die Werte zu bestimmen. Die Wichtungsfaktoren, mit denen diese einzelnen Summanden in die letztlich darzustellenden Werte eingehen, sind stark von den besonderen Umständen der jeweiligen Anwendung der Erfindung abhängig. Sie können beispielsweise von Hubschrauber zu Hubschrauber deutlich variieren.

Bei der Erfindung kann zusätzlich zu der Ermittlung der Abweichungen zwischen der Istposition und der Sollposition der Last in horizontalen Richtungen eine Abweichung der Istposition der Last von der Sollposition der Last in Drehrichtung um das Seil ermittelt werden. Dabei kann ein Wert, der aus der Abweichung und/oder einer Ableitung und/oder einem Integral der Abweichung in Bezug auf die Drehrichtung abgeleitet wird, durch eine Anzeige fortlaufend optisch angezeigt werden, wobei sich die Anzeige mit Änderungen des Werts gegenüber einer Markierung bewegt, die die Sollposition der Last anzeigt. Durch diese Ergänzung wird die Lage der Last in der Horizontalen vollständig erfasst und dargestellt, d. h. auch bezüglich einer Drehlage bzw. einer Drehschwingung um das Seil.

Wenn zusätzlich eine Abweichung der Istposition der Last von der Sollposition der Last in vertikaler Richtung ermittelt wird und ein Wert, der aus der Abweichung und/oder einer Ableitung und/oder einem Integral der Abweichung in vertikaler Richtung abgeleitet wird, durch eine Anzeige fortlaufend optisch angezeigt wird, wobei sich die Anzeige mit Änderungen des Werts gegenüber einer Markierung bewegt, die die Sollposition der Last anzeigt, wird auch die Lage und Bewegung der Last in Z-Richtung berücksichtigt. Dies ist insbesondere für ein weiches Absetzen der Last wichtig.

Bei einem Hubschrauber kann der Wert für die horizontale Drehrichtung durch eine Headinganzeige und der Wert für die vertikale Richtung durch eine Anzeige für die Steig- und Sinkgeschwindigkeit oder die Flughöhe des Hubschraubers angezeigt werden. Dabei können die durch diese Anzeigen üblicherweise dargestellten Werte mit den erfindungsgemäß abgeleiteten Werten überlagert werden. Ebenso ist eine alternative Darstellung der normalerweise angezeigten Werte und der erfindungsgemäß abgeleiteten Werte möglich.

Alle erfindungsgemäß abgeleiteten Werte sind geeignet, einem Autopiloten für die automatische Steuerung eines Vorwärts- oder Schwebeflugs des Hubschraubers zugeführt zu werden, um diesem die jeweilige Aufgabe der Positionierung der Last ganz oder auch nur für einzelne der Richtungen, in denen Abweichungen der Istposition von der Sollposition der Last erfasst werden, zu übertragen. Hierzu werden diese Werte statt der normalerweise von dem Autopiloten berücksichtigten Werte oder überlagert mit diesen an die Eingänge des Autopiloten angelegt. Die Zuordnung der erfindungsgemäß abgeleiteten Werte zu den einzelnen Eingängen des Autopiloten entspricht ihrer Zuordnung bei ihrer Anzeige auf den Instrumenten des Hubschraubers. Eine Vornahme von Änderungen bei dem Autopiloten des Hubschraubers selbst ist nicht erforderlich, er löst die Positionieraufgabe aufgrund der ihm zugeführten Werte ohne die Aufgabe selbst zu kennen. Dies macht deutlich, wie sehr die erfindungsgemäß abgeleiteten Werte geeignet sind, die Positionieraufgabe in eine für den Hubschrauberpiloten überschaubarere Hubschrauberflugaufgabe zu übersetzen.

Es versteht sich, dass die erfindungsgemäß abgeleiteten Werte, wenn die jeweilige Last mit einem Kran zu positionieren ist, auch als Eingangssignale für eine automatische Steuerung des Krans verwendet werden können.

Zusätzlich zu der Anzeige der erfindungsgemäß abgeleiteten Werte und/oder deren Verwendung in einem Autopiloten können diese auch auf das Überschreiten von Grenzwerten überwacht werden, um gegebenenfalls Warnhinweise an den Hubschrauberpiloten bzw. Kranführer zu geben. Aufgrund dieser Warnhinweise können gezielte Nothandlungen ausgeführt werden, wie z. B. das Abwerfen der Last und das sofortige Steigen eines Hubschraubers, wenn extreme Sinkraten in Bodennähe auftreten, die einen Absturz befürchten lassen.

Die Abweichungen der Istposition von der Sollposition der Last können mit Hilfe unterschiedlicher Techniken ermittelt werden. Eine konkrete Möglichkeit besteht darin, die Istposition und die Sollposition der Last mit einer Kamera an dem Hubschrauber bzw. dem Kran zu erfassen und mit einer Bildverarbeitung auszuwerten. Dazu können an der Last und an oder um deren Sollposition optische Markierungen angebracht werden, die von der Bildverarbeitung besonders leicht zu erkennen sind. Die Markierungen können jeweils in Mustern angeordnet sein, die durch die Bildverarbeitung auch in Bezug auf ihre Winkelstellung zu und ihre Entfernung von der Kamera auswertbar sind. Eine andere Möglichkeit ist es, die Istposition in absoluten Daten zu bestimmen und mit einer Sollposition in absoluten Daten zu vergleichen. Die Istposition der Last in absoluten Daten kann beispielsweise unter Verwendung eines so genannten digitalen globalen Positionierungssystems (DGPS) an der Last bestimmt werden. Ein solches DGPS kann auch verwendet werden, um die Sollposition der Last, beispielsweise vor Ort am Boden zu bestimmen. Weiterhin ist die Verwendung von Abstands- und Richtungssensoren möglich, die den aktuellen Abstand zwischen der Sollposition und der Istposition und die Richtung dieses Abstands erfassen. Diese Sensoren können sowohl an der Last, d. h. an der Istposition als auch an der Sollposition der Last vorgesehen werden und arbeiten typischerweise mit einer Sonde, beispielsweise einem Reflektor oder dergleichen, an der jeweils anderen Position zusammen. An der Last können zusätzliche Sensoren für beispielsweise die Beschleunigung der Last vorgesehen sein, um zusätzliche Daten für eine genauere Ermittlung der interessierenden Abweichungen bzw. deren Ableitungen und Integrale zu gewinnen, wobei zu berücksichtigen ist, dass eine Beschleunigung einer zweiten Ableitung eines Abstands zwischen zwei Positionen entspricht. Typischerweise werden die. Signale von Einrichtungen an der Last, d. h. der Istposition, und/oder an der Sollposition drahtlos in einen Hubschrauber oder an eine Bedienstation eines Krans übertragen, um dort erfindungsgemäß ausgewertet und angezeigt zu werden. Selbst bei einem Hubschrauber ist zumindest von der Last aus auch eine kabelgestützte Übertragung der entsprechenden Signale möglich. Aber auch bei einem Kran ist es häufig einfacher zu handhaben, die Signale drahtlos zu übertragen, als hierfür Drahtverbindungen bereitzustellen.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUR

Im Folgenden wird die Erfindung anhand von in den Figuren skizzierten Ausführungsbeispielen weiter erläutert und beschrieben.
- **Fig. 1**: zeigt eine Prinzipskizze zur Umsetzung der Erfindung bei einem Hubschrauber mit einer angehängten Last.
- **Fig. 2**: zeigt ein Anzeigeinstrument des Hubschraubers gemäß Fig. 1.
- **Fig. 3**: zeigt die Zeitverläufe der Nicklage Theta und der Geschwindigkeit u eines Hubschraubers sowie die Position x einer an den Hubschrauber gehängten Last, beim Versetzen der Last;
- **Fig. 4**: zeigt ein Anzeigeinstrument für die Umsetzung der Erfindung bei einem Kran mit angehängter Last.

### FIGURENBESCHREIBUNG

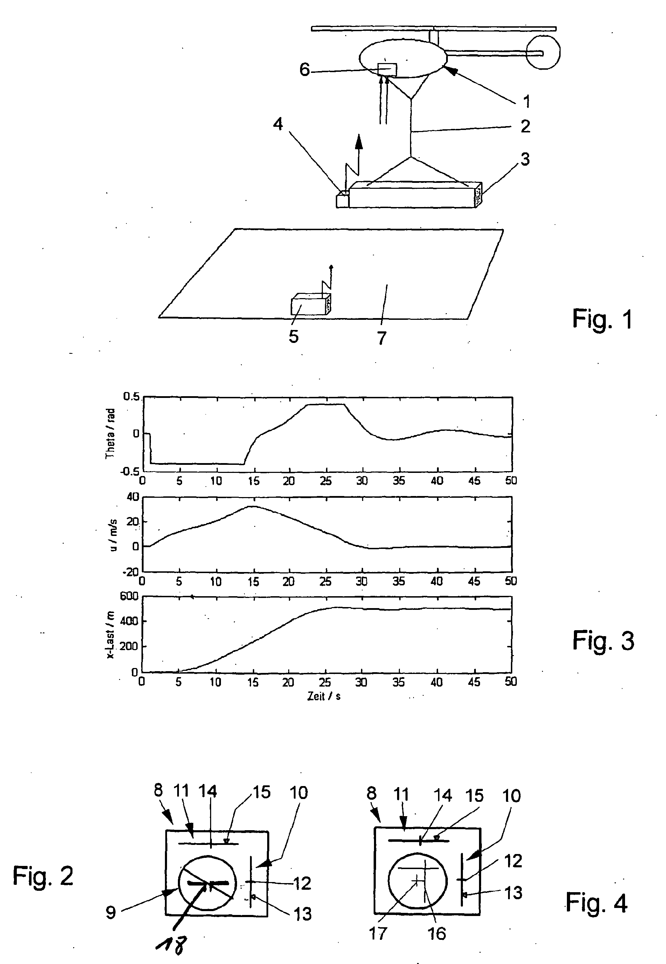

**Fig. 1** zeigt einen Hubschrauber 1 an den über ein Seil 2 eine Last 3 angehängt ist. Die Last 3 kann Pendelbewegungen um ihre Aufhängung an dem Hubschrauber 1 ausführen; d. h. die Position des Hubschraubers 1 entspricht nicht unbedingt genau einer Position der Last 3. Zudem befindet sich die Last 3 nicht im unmittelbaren Sichtfeld eine Piloten des Hubschraubers 1. Um die Last 3 dennoch präzise absetzen zu können, sind Messeinrichtungen 4 bis 6 zum Ermitteln von Abweichungen zwischen der Istposition der Last 3 und einer Sollposition der Last 3 vorgesehen. Die Messeinrichtungen umfassen eine Messeinheit 4, die an der Last vorgesehen ist. Die Messeinheit 4 weist einen DGPS-Empfänger auf, der die absolute Lage der Last einschließlich ihrer Drehrichtung um das Seil 2 herum bestimmt. Die Messeinheit 4 sendet diese Informationen an eine Auswerteeinheit 6 in dem Hubschrauber 1. Ebenso empfängt die Auswerteeinheit 6 Informationen von einer Messeinheit 5, die auch einen DGPS-Empfänger umfasst, um die absolute Position und Drehrichtung für eine Sollposition der Last 3, die hier auf einer Fläche 7 liegt, zu übermitteln. Die Auswerteeinheit 6 bestimmt aus den Signalen von den beiden Messeinheiten 4 und 5 die Abweichungen zwischen der Istposition der Last 3 und ihrer Sollposition 5 getrennt in zwei unabhängigen horizontalen Richtungen, der Drehrichtung um das Seil 2 und der Richtung des vertikalen Abstands. Die beiden horizontalen Richtungen, in denen die Abweichungen ermittelt werden, sind die Längsrichtung und die Querrichtung, d. h. die Rollachse und die Nickachse des Hubschraubers 1. Da sich diese Richtungen mit Drehungen des Hubschraubers 1 um das Seil 2 unabhängig von der absoluten Position der Last 3 verändern können, führt die Auswerteeinheit 6 eine entsprechende Koordinatentransformation auf das durch die Ausrichtung des Hubschraubers 1 vorgegebene Koordinatensystem durch. Neben der Ermittlung der Abweichung zwischen der Istposition der Last 3 und ihrer Sollposition bestimmt die Auswerteeinheit 6 auch mindestens eine Ableitung und/oder ein Integral zu einer der horizontalen Abweichungen, in aller Regel die erste und die zweite Ableitung dieser Abweichungen. Entsprechende Verarbeitungen führt die Auswerteeinheit 6 auch in Bezug auf die Abweichung der Istposition von der Sollposition der Last 3 in der Drehrichtung um das Seil 2 und in der vertikalen Richtung durch. Für jede dieser Abweichungen wird fortlaufend ein Wert generiert, der sich zumindest bei den horizontalen Abweichungen neben der Abweichung selbst aus einem weiteren Summanden einer mit einem Wichtungsfaktor gewichteten Ableitung oder eines mit einem Wichtungsfaktor gewichteten Integrals zusammensetzt und insoweit nicht linear von der Abweichung abhängt.

Diese Werte werden von der Auswerteeinheit 6 auf einem in **Fig. 2** dargestellte Anzeigeinstrument 8 dargestellt, das vom Aufbau her einem künstlichen Horizont 9 mit einer Steig- bzw. Sinkgeschwindigkeitsanzeige 10 und einer Richtungsanzeige, auch Headinganzeige 11 genannt, besteht. Durch den künstlichen Horizont 9, der normalerweise zum Anzeigen der Nick- und Rolllage des Hubschraubers 1 verwendet wird, zeigt die Anzeigeeinheit 6 die Werte an, die sie aus den Abweichungen der Istposition der Last 3 von ihrer Sollposition in Richtung der Längsachse und der Querachse des Hubschraubers 1 abgeleitet hat. D. h., eine Lageverschiebung der Last 3 in Richtung der Querachse des Hubschraubers 1 wird dem Piloten des Hubschraubers 1 als Änderung der Rolllage des Hubschraubers 1 angezeigt. Entsprechend wird eine Änderung der Lage der Last 3 in der Längsrichtung des Hubschraubers 1 als Änderung der Nicklage des Hubschraubers 1 angezeigt. Diese Art des Anzeigens von Werten, die aus den Abweichungen der Istposition der Last 3 von ihrer Sollposition abgeleitet sind, führt dazu, dass der Pilot des Hubschraubers 1 intuitiv die richtigen Hubschrauberbewegungen auslöst, um die Last 3 mit ihrer Istposition über die Sollposition zu bringen, so dass eine Abweichung der Istposition der Last 3 zu ihrer Sollposition in der Horizontalen nicht mehr gegeben ist. D. h., die Festlegung der auf dem künstlichen Horizont 9 angezeigten Werte in der Auswerteeinheit 6 erfolgt derart, dass ein Pilot mit Erfahrungen auf dem Hubschrauber 1 den Hubschrauber 1 genau dann zur exakten Positionierung der Last 3 über ihrer Sollposition optimal ansteuert, wenn er unter Berücksichtigung des künstlichen Horizonts 9 versucht, den Hubschrauber 1 gerade zu halten, d.h. den künstlichen Horizont 9 mit einer Markierung 18 für diese gerade Lage des Hubschraubers 1 in Überdeckung zu bringen und dort zu halten. Um optimale intuitive Reaktionen des Piloten auszulösen, sind je nach dem einzelnen Hubschrauber 1 die Wichtungsfaktoren, mit denen die verschiedenen Ableitungen und Integrale sowie die jeweilige Abweichung selbst in die auf dem günstigen Horizont 9 dargestellten Werte eingehen, speziell festzulegen. Die Festlegung erfordert im Einzelfall das Ausprobieren unterschiedlicher Wichtungsfaktoren, bis die intuitiven Reaktionen des Piloten eines bestimmten Hubschraubertyps auf die Anzeige unterschiedlicher Nick- und Rolllagen zu einer schnellen und pendelfreien Positionierung der Last 3 in horizontaler Richtung über der Sollposition erfolgt. Es ist nach solch einer Abstimmung grundsätzlich auch möglich, die Werte, die erfindungsgemäß auf dem künstlichen Horizont 9 dargestellt werden, einem Autopiloten des Hubschraubers 1 zuzuführen, der dann die Positionierung der Last automatisch durchführt. Zu diesem Zeck, aber auch bei der Darstellung auf dem künstlichen Horizont 9 für den Piloten des Hubschraubers 1 können die Werte der Anzeige der tatsächlichen Nick- und Rolllage des Hubschraubers 1 auf dem künstlichen Horizont überlagert werden. Die von den Messeinrichtungen 4 bis 6 weiter festgestellten Abweichungen werden mit den Anzeigen 10 und 11 dargestellt. Dabei wird auf der Anzeige 10, die normalerweise für die Steig- bzw. Sinkgeschwindigkeit des Hubschraubers 1 oder die Flughöhe des Hubschraubers 1 über dem Boden vorgesehen ist, die aktuelle Höhe der Last 12 gegenüber der Sollhöhe der Last 13, die als so genannter Höhenbug markiert ist, angezeigt. Entsprechend wird die Drehrichtung der Last 3 als aktuelle Drehrichtung 14 gegenüber einer Solldrehrichtung 15 angezeigt.

**Fig. 3** skizziert einen Beispielsfall, in dem eine 2.000 kg schwere Last an einem 50 m langen Seil unter einem Hubschrauber mit der Masse 5.000 kg aus dem Schwebeflug um 500 m weiter nach vorne versetzt werden soll. Die Auftragung der Nicklage Theta zeigt die durch die Anzeige gemäß Fig. 2 von dem Piloten angeforderten aber durch Maximalwerte begrenzten Werte der Nicklage Theta an, die notwendig sind, um die Umsetzung optimal zu realisieren. Hierdurch beschleunigt der Hubschrauber bis auf 30 m/s (siehe u) bis er durch Aufnicken bei t=14 s wieder in den Schwebeflug verzögert. Die Position der Last (x-Last) hat sich beim Ende des Manövers von 0 m (=Anfangszustand) bis auf 500 m (Ziel) geändert. Eine Pendelbewegung ist dabei fast vollständig unterblieben.

**Fig. 4** skizziert ein Anzeigeinstrument 8 wie es für einen Kran mit einer angehängten pendelfähigen Last geeignet wäre, um den Kranführer zu intuitiv richtigen Steuerkommandos zu veranlassen, mit denen er die Last pendelfrei in eine Sollposition bringt. Dabei unterscheiden sich die Anzeigen 10 und 11 nicht von dem Anzeigeinstrument 8 des Hubschraubers gemäß Fig. 2. Statt des künstlichen Horizonts ist jedoch ein Kreuzzeiger 14 vorgesehen, der die aus den Abweichungen der Istposition der Last von ihrer Sollposition in der Horizontalen abgeleiteten Werte gegenüber einer dies Sollposition widerspiegelnden Markierung 15 anzeigt. Der Abstand des Kreuzzeigers 14 von der Markierung 15 spiegelt aber auch hier nicht linear den reinen horizontalen Abstand zwischen der Sollposition und der Istposition der Last wieder. Vielmehr geht auch hier zusätzlich mindestens eine Ableitung oder ein Integral jeder Abweichung ein. Dies steht nicht der Tatsache entgegen, dass die Last ihre Sollposition in der Horizontalen genau dann erreicht hat, wenn sich der Kreuzzeiger 14 anhaltend über der Markierung 15 befindet.

### BEZUGSZEICHENLISTE

- 1: Hubschrauber
- 2: Seil
- 3: Last
- 4: Messeinheit
- 5: Messeinheit
- 6: Auswerteeinheit
- 7: Fläche
- 8: Anzeigeinstrument
- 9: künstlicher Horizont
- 10: Anzeige
- 11: Anzeige
- 12: Höhe
- 13: Markierung
- 14: Drehrichtung
- 15: Markierung
- 16: Kreuzzeiger
- 17: Markierung
- 18: Markierung

- 4-6: Messeinrichtungen

## Patentansprüche

1. Verfahren zur Darstellung der Lage und des Bewegungszustands einer pendelfähigen Last, insbesondere einer über ein Seil an einen Hubschrauber oder einen Kran angehängten Last, **dadurch gekennzeichnet, dass** Abweichungen einer Istposition der Last (3) von einer Sollposition der Last (3) in zwei unabhängigen horizontalen Richtungen ermittelt werden und dass Werte, die jeweils aus einer der Abweichungen und einer Ableitung und/oder einem Integral dieser Abweichung abgeleitet werden, durch eine gemeinsame Anzeige (9, 16) fortlaufend optisch angezeigt werden, wobei sich die Anzeige mit Änderungen der Werte für jede der beiden linear unabhängigen horizontalen Richtungen in eine andere Richtung bewegt.

2. Verfahren nach Anspruch 1, **dadurch gekennzeichnet, dass** sich die Anzeige (9, 16) gegenüber einer Markierung (18, 17) bewegt, die die Sollposition der Last (3) anzeigt.

3. Verfahren nach Anspruch 1 oder 2, **dadurch gekennzeichnet, dass** die beiden linear unabhängigen Richtungen absolut fest sind oder durch eine Struktur (1) definiert werden, an die die Last (3) angehängt ist.

4. Verfahren nach Anspruch 1, 2 oder 3, **dadurch gekennzeichnet, dass** die beiden Werte durch einen künstlichen Horizont (9) eines Hubschraubers (1) angezeigt werden.

5. Verfahren nach Anspruch 4, **dadurch gekennzeichnet, dass** die beiden Werte überlagert mit einer Nick- und Rolllage des Hubschraubers (1) angezeigt werden.

6. Verfahren nach Anspruch 1, 2 oder 3, **dadurch gekennzeichnet, dass** die beiden Werte durch einen Kreuzzeiger (17) angezeigt werden.

7. Verfahren nach einem der Ansprüche 1 bis 6, **dadurch gekennzeichnet, dass** die Abweichungen gefiltert, differenziert, integriert und/oder mit einem Wichtungsfaktor multipliziert werden, um Summanden der Werte abzuleiten.

8. Verfahren nach einem der Ansprüche 1 bis 7, **dadurch gekennzeichnet, dass** zusätzlich eine Abweichung der Istposition der Last (3) von der Sollposition der Last (3) in Drehrichtung um das Seil (2) ermittelt wird und dass ein Wert, der aus der Abweichung und/oder einer Ableitung und/oder einem Integral der Abweichung abgeleitet wird, durch eine Anzeige (11) fortlaufend optisch angezeigt wird, wobei sich die Anzeige mit Änderungen des Werts gegenüber einer Markierung (15) bewegt, die die Sollposition der Last (3) anzeigt.

9. Verfahren nach einem der Ansprüche 1 bis 8, **dadurch gekennzeichnet, dass** zusätzlich eine Abweichung der Istposition der Last (3) von der Sollposition der Last (3) in vertikaler Richtung ermittelt wird und dass ein Wert, der aus der Abweichung und/oder einer Ableitung und/oder einem Integral der Abweichung abgeleitet wird, durch eine Anzeige (10) fortlaufend optisch angezeigt wird, wobei sich die Anzeige mit Änderungen des Werts gegenüber einer Markierung (13) bewegt, die die Sollposition der Last anzeigt.

10. Verfahren nach den Ansprüchen 8 und 9, **dadurch gekennzeichnet, dass** der Wert für die horizontale Drehrichtung durch eine Headinganzeige (11) und der Wert für die vertikale Richtung durch eine Anzeige (10) für die Steig- und Sinkgeschwindigkeit oder die Flughöhe eines Hubschraubers (1) angezeigt wird.

11. Verfahren nach einem der Ansprüche 1 bis 10, **dadurch gekennzeichnet, dass** mindestens einer der abgeleiteten Werte einem Autopiloten des Hubschraubers (1) zugeführt wird.

12. Vorrichtung zur Darstellung der Lage und des Bewegungszustands einer pendelfähigen Last, insbesondere einer über ein Seil an einen Hubschrauber oder einen Kran angehängten Last, **dadurch gekennzeichnet, dass** Messeinrichtungen (4-6) zum Ermitteln von Abweichungen einer Istposition der Last (3) von einer Sollposition der Last (3) in zwei linear unabhängigen horizontalen Richtungen und ein Anzeigeinstrument (8) für Werte vorgesehen sind, die jeweils aus einer der Abweichungen und einer Ableitung und/oder einem Integral dieser Abweichung abgeleitet sind, wobei das Anzeigeinstrument die Werte fortlaufend durch eine gemeinsame Anzeige (9, 16) optisch anzeigt, die sich mit Änderungen der Werte für jede der beiden linear unabhängigen horizontalen Richtungen in eine andere Richtung bewegt.

13. Vorrichtung nach Anspruch 12, **dadurch gekennzeichnet, dass** das Anzeigeinstrument (8) die Werte so anzeigt, dass sich die Anzeige (9, 16) gegenüber einer Markierung (18, 17) bewegt, die die Sollposition der Last (3) anzeigt.

14. Vorrichtung nach Anspruch 12 oder 13, **dadurch gekennzeichnet, dass** die beiden linear unabhängigen Richtungen absolut fest sind oder durch eine Struktur (1) definiert sind, an die die Last (3) angehängt ist.

15. Vorrichtung nach Anspruch 12, 13 oder 14, **dadurch gekennzeichnet, dass** das Anzeigeinstrument (8) den künstlichen Horizont (9) eines Hubschraubers umfasst.

16. Vorrichtung nach Anspruch 15, **dadurch gekennzeichnet, dass** der künstliche Horizont (9) alternativ und/oder überlagert zum Anzeigen einer Nick- und Rolllage des Hubschraubers (1) vorgesehen ist.

17. Vorrichtung nach Anspruch 12, 13 oder 14, **dadurch gekennzeichnet, dass** das Anzeigeinstrument (8) die beiden Werte durch einen Kreuzzeiger (16) anzeigt.

18. Vorrichtung nach einem der Ansprüche 12 bis 17, **dadurch gekennzeichnet, dass** eine die Werte ableitende Auswerteeinrichtung (6) mindestens ein Filter, ein Differenzierglied, ein Integrierglied und/oder einen Proportionalverstärker sowie einen Addierer für Signale aufweist, die die Abweichungen wiedergeben.

19. Vorrichtung nach einem der Ansprüche 12 bis 18, **dadurch gekennzeichnet, dass** die Messeinrichtungen (4-6) zusätzlich eine Abweichung der Istposition der Last (3) von der Sollposition der Last (3) in Drehrichtung um das Seil (2) ermitteln und dass das Anzeigeinstrument (8) einen Wert, der aus der Abweichung und/oder einer Ableitung und/oder einem Integral der Abweichung abgeleitet ist, durch eine Anzeige (11) fortlaufend optisch anzeigt, die sich mit Änderungen des Werts gegenüber einer Markierung (15) bewegt, die die Sollposition der Last (3) anzeigt.

20. Vorrichtung nach einem der Ansprüche 12 bis 19, **dadurch gekennzeichnet, dass** die Messeinrichtungen (4-6) zusätzlich eine Abweichung der Istposition der Last (3) von der Sollposition der Last (3) in vertikaler Richtung ermitteln und dass das Anzeigeinstrument (8) einen Wert, der aus der Abweichung und/oder einer Ableitung und/oder einem Integral der Abweichung abgeleitet ist, durch eine Anzeige (10) fortlaufend optisch anzeigt, die sich mit Änderungen des Werts gegenüber einer Markierung (13) bewegt, die die Sollposition der Last (3) anzeigt.

21. Vorrichtung nach den Ansprüchen 19 und 20, **dadurch gekennzeichnet, dass** das Anzeigeinstrument (8) eine Headinganzeige (11) und eine Anzeige (10) für die Steig- und Sinkgeschwindigkeit oder die Flughöhe eines Hubschraubers (1) umfasst und den Wert für die horizontale Drehrichtung durch die Headinganzeige (11) und den Wert für die vertikale Richtung durch die Anzeige (10) für die Steig- und Sinkgeschwindigkeit oder die Flughöhe anzeigt.

22. Vorrichtung nach einem der Ansprüche 12 bis 21, **dadurch gekennzeichnet, dass** der Hubschrauber (1) ein Autopiloten aufweist, der mindestens einen der abgeleiteten Werte als Eingangssignal berücksichtigt die Vorrichtung angepasst ist, so dass mindestens einer der abgeleiteter Werte als Eingangssignal für einen Autopilaten eines Hubschraubers zu berücksichtigen ist.

## Claims

1. Method of presenting the location and the movement state of a load capable of oscillating, particularly of a load attached to a helicopter or a crane via a cable, **characterized in that** deviations of an actual location of the load (3) from a target location of the load (3) are determined in two independent horizontal directions, and that values, which are each derived from one of the deviations and a derivative and/or an integral of this deviation, are continuously optically indicated by a common indicator (9, 16), wherein the indicator moves with changes of the values for each of the two linearly independent horizontal directions in another direction.

2. Method of claim 1, **characterized in that** the indicator (9, 16) moves with regard to a marker (18, 17) indicating the target location of the load (3).

3. Method of claim 1 or 2, **characterized in that** the two linearly independent directions are absolutely fixed or are defined by a structure (1) to which the load (3) is attached.

4. Method of claim 1, 2 or 3, **characterized in that** the two values are indicated by an artificial horizon (9) of a helicopter (1).

5. Method of claim 4, **characterized in that** the two values are indicated superimposed with a pitch or roll position of the helicopter (1).

6. Method of claim 1, 2 or 3, **characterized in that** the two values are indicated by a cross indicator (17).

7. Method of any of the claims 1 to 6, **characterized in that** the deviations are filtered, differentiated, integrated and/or multiplied by a weighting factor, to derive summands of the values.

8. Method of any of the claims 1 to 7, **characterized in that** additionally a deviation of the actual location of the load (3) from the target location of the load (3) in rotation direction about the cable (3) is determined and that a value which is derived from the deviation and/or a derivative and/or an integral of the deviation is continuously optically indicated by an indicator (11), wherein the indicator moves with changes of the value with regard to a marker (15) indicating the target location of the load (3).

9. Method of any of the claims 1 to 8, **characterized in that** additionally a deviation of the actual location of the load (3) from the target location of the load (3) in vertical direction is determined and that a value, which is derived from the deviation and/or a derivative and/or an integral of the deviation is continuously indicated by an indicator (10), wherein the indicator moves with changes of the value with regard to a marker (13) indicating the target location of the load.

10. Method of the claims 8 and 9, **characterized in that** the value for the horizontal rotation direction is indicated by a heading indicator (11) and the value for the vertical direction is indicated by an indicator (10) for the climb and sink rate or the flying altitude of a helicopter (1).

11. Method of any of the claims 1 to 10, **characterized in that** at least one of the derived values is supplied to an autopilot of the helicopter (1).

12. Device for presenting the location and the movement state of a load capable of oscillating, particularly of a load attached to a helicopter or a crane via a cable, **characterized in that** measuring installations (4-6) for determining deviations of an actual location of the load (3) from a target location of the load (3) in two linearly independent horizontal directions, and a indicator instrument (8) for values are provided, which are each derived from one of the deviations and a derivative and/or an integral of this deviation, wherein the indicator instrument continuously optically indicates the values by a common indicator (9, 16), which moves with changes of the values for each of the two linearly independent horizontal directions in another direction.

13. Device of claim 12, **characterized in that** the indicator instrument (8) indicates the values in such a way that the indicator (9, 16) moves with regard to a marker (18, 17) indicating the target position of the load (3).

14. Device of claim 12 or 13, **characterized in that** the two linearly independent directions are absolutely fixed or are defined by a structure (1) which is attached to the load (3).

15. Device of claim 12, 13 or 14, **characterized in that** the indicator instrument (8) includes the artificial horizon (9) of a helicopter.

16. Device of claim 15, **characterized in that** the artificial horizon (9) is alternatively or and/or in a superimposed manner provided for indicating a pitch and roll position of the helicopter (1).

17. Device of claim 12, 13 or 14, **characterized in that** the indicator instrument (8) indicates the two values by a cross indicator (16).

18. Device of any of the claims 12 to 17, **characterized in that** an evaluation installation (6) deriving the values comprises at least one filter, a differentiating member, an integrating member and/or a proportional amplifier as well as a summer for signals representing the deviations.

19. Device of any of the claims 12 to 18, **characterized in that** the measurement installations (4, 6) additionally determine a deviation of the actual location of the load (3) from the target location of the load (3) in rotation direction about the cable (2), and that the indicator instrument (8) continuously optically indicates a value, which is derived from the deviation and/or a derivative and/or an interim of the deviation, by an indicator 11, which moves with changes of the values with regard to a marker (15) which indicates the target position of the load (3).

20. Device of claim 12 to 19, **characterized in that** the measurement installations 4 to 6 additionally determine a deviation of the actual location of the load (3) from the target location of the load (3) in vertical direction, and that the indicator instrument (8) continuously optically indicate the value, which is derived from the deviation and/or derivative and/or an integral of the deviation, by an indicator (10), which moves with changes of the value with regard to a marker (13) indicating the target location of the load (3).

21. Device of claims 19 and 20, **characterized in that** the indicator instrument (8) includes a heading indicator (11) and an indicator (10) for the climb and sink velocity or the flight altitude of a helicopter (1) and indicates the value for the horizontal rotation direction by the heading indicator (11) and the value for the vertical direction by the indicator (10) for the climb and sink velocity or the flight altitude.

22. Device of any of the claims 12 to 21, **characterized in that** the device is configured such that at least one of the derived values is to be used as an input value for an autopilot of a helicopter.

## Revendications

1. Procédé destiné à la représentation de l'emplacement et de l'état de déplacement d'une charge oscillante, en particulier d'une charge suspendue par un câble à un hélicoptère ou une grue, **caractérisé en ce que** des écarts entre une position réelle de la charge (3) et une position théorique de la charge (3) dans deux directions horizontales indépendantes sont déterminés et **en ce que** des valeurs, qui sont déduites à chaque fois de l'un des écarts et d'une dérivée et/ou d'une intégrale de cet écart, sont affichées visuellement en continu par un affichage commun (9, 16), l'affichage se déplaçant avec des modifications des valeurs pour chacune des deux directions horizontales, indépendantes linéairement, dans une autre direction.

2. Procédé selon la revendication 1, **caractérisé en ce que** l'affichage (9, 16) se déplace par rapport à un repère (18, 17) qui affiche la position théorique de la charge (3).

3. Procédé selon la revendication 1 ou 2, **caractérisé en ce que** les deux directions linéairement indépendantes sont absolument fixes ou sont définies par une structure (1) à laquelle la charge (3) est accrochée.

4. Procédé selon la revendication 1, 2 ou 3, **caractérisé en ce que** les deux valeurs sont affichées par un horizon artificiel (9) d'un hélicoptère (1).

5. Procédé selon la revendication 4, **caractérisé en ce que** les deux valeurs sont affichées de façon superposée avec une position de tangage et une position de roulis de l'hélicoptère (1).

6. Procédé selon la revendication 1, 2 ou 3, **caractérisé en ce que** les deux valeurs sont affichées par des aiguilles croisées (17).

7. Procédé selon l'une quelconque des revendications 1 à 6, **caractérisé en ce que** les écarts sont filtrés, différenciés, intégrés et/ou multipliés avec un facteur de pondération, afin de déduire des opérandes des valeurs.

8. Procédé selon l'une quelconque des revendications 1 à 7, **caractérisé en ce qu'**en supplément un écart entre la position réelle de la charge (3) et la position théorique de la charge (3) dans le sens de rotation autour du câble (2) est déterminé et **en ce qu'**une valeur, qui est déduite de l'écart et/ou de la dérivée et/ou d'une intégrale de l'écart, est affichée visuellement en continu par un affichage (11), l'affichage se déplaçant avec des variations de la valeur par rapport à un repère (15) qui indique la position théorique de la charge (3).

9. Procédé selon l'une quelconque des revendications 1 à 8, **caractérisé en ce qu'**en supplément un écart entre la position réelle de la charge (3) et la position théorique de la charge (3) dans la direction verticale est déterminé et **en ce qu'**une valeur, qui est déduite de l'écart et/ou d'une dérivée et/ou d'une intégrale de l'écart, est affichée visuellement en continu par un affichage (10), l'affichage se déplaçant avec des variations de la valeur par rapport à un repère (13) qui indique la position théorique de la charge.

10. Procédé selon les revendications 8 et 9, **caractérisé en ce que** la valeur pour le sens de rotation horizontal est affichée par un affichage de cap (11) et la valeur pour la direction verticale par un affichage (10) pour la vitesse de montée et la vitesse de descente ou la hauteur de vol d'un hélicoptère (1).

11. Procédé selon l'une quelconque des revendications 1 à 10, **caractérisé en ce qu'**au moins l'une des valeurs déduites est amenée à un pilote automatique de l'hélicoptère (1).

12. Dispositif destiné à la représentation de l'emplacement et de l'état de déplacement d'une charge oscillante, en particulier d'une charge accrochée par un câble à un hélicoptère ou une grue, **caractérisé en ce que** des appareils de mesure (4-6) destinés à déterminer des écarts entre une position réelle de la charge (3) et une position théorique de la charge (3) dans deux directions horizontales linéairement indépendantes et un instrument d'affichage (8) sont prévus pour des valeurs qui sont déduites à chaque fois de l'un des écarts et d'une dérivée et/ou d'une intégrale de cet écart, l'instrument d'affichage affichant visuellement les valeurs en continu par un affichage commun (9, 16), qui se déplace avec des variations des valeurs pour chacune des deux directions horizontales indépendantes linéairement dans une autre direction.

13. Dispositif selon la revendication 12, **caractérisé en ce que** l'instrument d'affichage (8) affiche les valeurs de telle sorte que l'affichage (9, 16) se déplace par rapport à un repère (18, 17) qui affiche la position théorique de la charge (3).

14. Dispositif selon la revendication 12 ou 13, **caractérisé en ce que** les deux directions linéairement indépendantes sont absolument fixes ou sont définies par une structure (1) à laquelle la charge (3) est accrochée.

15. Dispositif selon la revendication 12, 13 ou 14, **caractérisé en ce que** l'instrument d'affichage (8) comprend l'horizon artificiel (9) d'un hélicoptère.

16. Dispositif selon la revendication 15, **caractérisé en ce que** l'horizon artificiel (9) est prévu de façon alternative et/ou de façon superposée pour l'affichage d'une position de tangage et d'une position de roulis de l'hélicoptère (1).

17. Dispositif selon la revendication 12, 13 ou 14, **caractérisé en ce que** l'instrument d'affichage (8) affiche les deux valeurs par des aiguilles croisées (16).

18. Dispositif selon l'une quelconque des revendications 12 à 17, **caractérisé en ce qu'**un dispositif d'analyse (6) déduisant les valeurs présente au moins un filtre, un élément de différenciation, un élément d'intégration et/ou un amplificateur proportionnel et un additionneur pour des signaux qui restituent des écarts.

19. Dispositif selon l'une quelconque des revendications 12 à 18, **caractérisé en ce que** les appareils de mesure (4-6) déterminent en supplément un écart entre la position réelle de la charge (3) et la position théorique de la charge (3) dans le sens de rotation autour du câble (2) et **en ce que** l'instrument d'affichage (8) affiche visuellement en continu une valeur, qui est déduite de l'écart et/ou d'une dérivée et/ou d'une intégrale de l'écart, par un affichage (11) qui se déplace avec des variations de la valeur par rapport à un repère (15) qui affiche la position théorique de la charge (3).

20. Dispositif selon l'une quelconque des revendications 12 à 19, **caractérisé en ce que** les appareils de mesure (4-6) déterminent en supplément un écart entre la position réelle de la charge (3) et la position théorique de la charge (3) dans le sens vertical et **en ce que** l'instrument d'affichage (8) affiche visuellement en continu une valeur, qui est déduite de l'écart et/ou d'une dérivée et/ou d'une intégrale de l'écart, par un affichage (10) qui se déplace avec des variations de la valeur par rapport à un repère (13) qui affiche la position théorique de la charge (3).

21. Dispositif selon les revendications 19 et 20, **caractérisé en ce que** l'instrument d'affichage (8) comprend un affichage de cap (11) et un affichage (10) pour la vitesse de montée et la vitesse de descente ou la hauteur de vol d'un hélicoptère (1) et affiche la valeur pour le sens de rotation horizontal par l'affichage de cap (11) et la valeur pour la direction verticale par l'affichage (10) pour la vitesse de montée et la vitesse de descente ou la hauteur de vol.

22. Dispositif selon l'une quelconque des revendications 12 à 21, **caractérisé en ce que** le dispositif est adapté de telle sorte qu'au moins l'une des valeurs déduites doit être prise en compte comme signal d'entrée pour un pilote automatique d'un hélicoptère.
